**Europäisches Patentamt**

**European Patent Office**

**Office européen des brevets**

(19)

(11) Publication number : **0 511 852 B1**

(12) **EUROPEAN PATENT SPECIFICATION**

(45) Date of publication of patent specification :
06.12.95 Bulletin 95/49

(51) Int. Cl.⁶ : **H02M 3/335, H02M 7/10**

(21) Application number : **92303875.6**

(22) Date of filing : **29.04.92**

(54) **Power supply circuit.**

(30) Priority : **01.05.91 JP 100025/91**

(43) Date of publication of application :
**04.11.92 Bulletin 92/45**

(45) Publication of the grant of the patent :
**06.12.95 Bulletin 95/49**

(84) Designated Contracting States :
**DE FR GB**

(56) References cited :
**EP-A- 0 325 454**
**INSTRUMENTS AND EXPERIMENTAL**
**TECHNIQUES no. 5, September 1970, pp.**
**1371-1373; V.M. Vakulenko et al.: "Volt-**
**age-Doubler Charging Circuit For A Storage**
**Capacitor"**

(73) Proprietor : **BRIDGESTONE CORPORATION**
**10-1, Kyobashi 1-Chome**
**Chuo-Ku**
**Tokyo 104 (JP)**

(72) Inventor : **Ohishi, Masatoshi**
**3-5-5 Ogawa-higashi-cho**
**Kodaira-shi, Tokyo (JP)**

(74) Representative : **Healy, Cecilia Patricia et al**
**E.N. Lewis & Taylor**
**5 The Quadrant**
**Coventry CV1 2EL (GB)**

EP 0 511 852 B1

## Description

The present invention relates to a power supply circuit, and more particularly to a power supply circuit which is electrically connected to a capacitive load, such as an electrode section of a vibration damping apparatus or an electrode of a power transmission apparatus using electrorheological fluid so as to apply a desired voltage to the capacitive load, and which is used to cut off the voltage applied to the capacitive load and to vary, continuously or in steps, the voltage applied to the capacitive load.

There has heretofore been known electrorheological fluid type applied equipment, such as a vibration damping apparatus or a power transmission apparatus, of a type wherein the electrorheological fluid is interposed between electrodes and the viscosity of the electrorheological fluid to which a desired voltage is applied is used. A power supply circuit comprising a transformer and a rectifier circuit, which is electrically connected to the secondary winding of the transformer and provided with capacitors, is a power supply circuit suitable for use with this type of equipment. It is said that the response (a time interval from the time at which a desired voltage is applied to the time at which the orientation of molecules is completed and the viscosity of the molecules becomes constant) of the electrorheological fluid is several msecs. In order to make the most use of this response characteristic, it is necessary to set the response of the power supply circuit to high-speed response of a few msecs or less, preferably 500 μ sec or less. The power supply circuit should take into consideration the response at the time of application of a desired voltage to a load, i.e., a period from the time at which the primary side of the power supply circuit starts to supply power to the time at which the voltage on the secondary side of the power supply circuit fully increases to a voltage near a set voltage (i.e., increases to 90% of the set voltage). The power supply circuit should also take into consideration the response at the time of a voltage cut-off, i.e., a period from the time at which the primary side of the power supply circuit stops supplying power to the time at which the voltage on the secondary side of the power supply circuit sufficiently drops (i.e., decreases to 10% of the set voltage).

As a method of improving the response of the conventional power supply circuit, there is known one of increasing the ability to supply power from the primary side of the power supply circuit to improve the response of the power supply circuit at the time of the voltage application. The response of the power supply circuit may be several times the oscillating cycle or period. Thus, a sufficient response of the power supply circuit can be expected even if a generally-used oscillating frequency (oscillating period: 50 μ sec) of 20 KHz is used.

On the other hand, as methods of improving the response of the power supply circuit at the time of the voltage cut-off, there have been known a method of mounting a dummy load or resistor for discharging electric charges stored in capacitors of a rectifier circuit on the output terminal of the rectifier circuit, a method of reducing the capacitance of all of the capacitors in a rectifier circuit, a method of reducing the discharge time constant, and a method of increasing the magnitude of an alternating current oscillating frequency which is input to the primary winding of a transformer and reducing the absolute time constant while the same discharge time constant is being set to each oscillating period.

The method using the dummy resistor has a drawback in that since power is consumed by the dummy resistor, the entire operational efficiency is reduced and the quantity of heat generated increases. According to the method of reducing the capacitance of each capacitor, ripple on the output from the rectifier circuit increases, thus providing unstable output. The method of increasing the magnitude of the frequency of the input voltage has a drawback in that the design of the power supply circuit is difficult and elements to be used are also required to have high-speed response characteristics, thereby raising the manufacturing cost.

With the foregoing drawbacks in view, it is an object of the present invention to provide a power supply circuit capable of providing high-speed response (in particular, response at the time of a cut-off of a voltage applied to a capacitive load at a low cost without impairing the stability of an output voltage.

According to the present invention, there is provided a power supply circuit comprising a transformer and a rectifier circuit, which is electrically connected to a secondary winding of the transformer and has capacitor. The power supply circuit is activated such that when the application of a voltage to a capacitive load electrically connected to the output terminals of the rectifier circuit is cut off, electric charges stored in the capacitor and in a capacitive component of the capacitive load are discharged through a resistive component of the capacitive load. The capacitor have an electrostatic capacitance determined such that a discharge time constant of a circuit comprised of the capacitor and the capacitive load is a predetermined value or less.

The capacitance of the capacitor in the rectifier circuit, i.e., the capacitor contributing to the discharge, storing the electric charges therein which is discharged through the resistive component of the capacitive load together with the electric charges stored in the capacitive component of the capacitive load when the voltage applied to the capacitive load is cut off, are determined such that the discharge time constant of the circuit comprised of the above capacitor and the capacitive load, which is electrically connected to the output terminals of the rectifier circuit, is a predetermined value or less. In the present invention, the electrostatic capacitance of the capacitor in the rectifier circuit, which contribute to the discharge, is determined in view of a characteristic of the capacitive load. Therefore, the necessary discharge time constant can be obtained by reducing the electrostatic capacitance of the capacitor, thereby making it possible to produce high-speed response of the power supply circuit when the supply of the voltage to the capacitive load is cut off. It is also unnecessary to increase the magnitude of the frequency of an applied voltage beyond the needed frequency. Therefore, the power supply circuit is simplified and inexpensive electrical parts can be used. Further, since the capacitance of the capacitor contributing to the discharge is reduced and the capacitances of other capacitors are not reduced more than needed, ripple on the output voltage can be determined such that it has no effect on the capacitive load. Necessary high-speed response can therefore be achieved.

According to the present invention, as described above, the capacitance of the capacitor in the rectifier circuit, which contribute to the discharge, is determined such that the discharge time constant is a predetermined value or less. The present invention can therefore has an advantage in that the high-speed response (in particular, response at the time of the cut-off of the voltage applied to the capacitive load) of the power supply circuit can be produced at low cost without impairing the stability of the output voltage.

The invention as claimed in claims 1 and 10 will now be described further by way of example with reference to the accompanying drawings in which:

FIG. 1 is a block diagram showing a first embodiment of the present invention;

FIG. 2 is a circuit diagram showing a rectifier circuit employed in the first embodiment shown in FIG. 1;

FIG. 3 is a circuit diagram showing another rectifier circuit employed in the first embodiment depicted in FIG. 1;

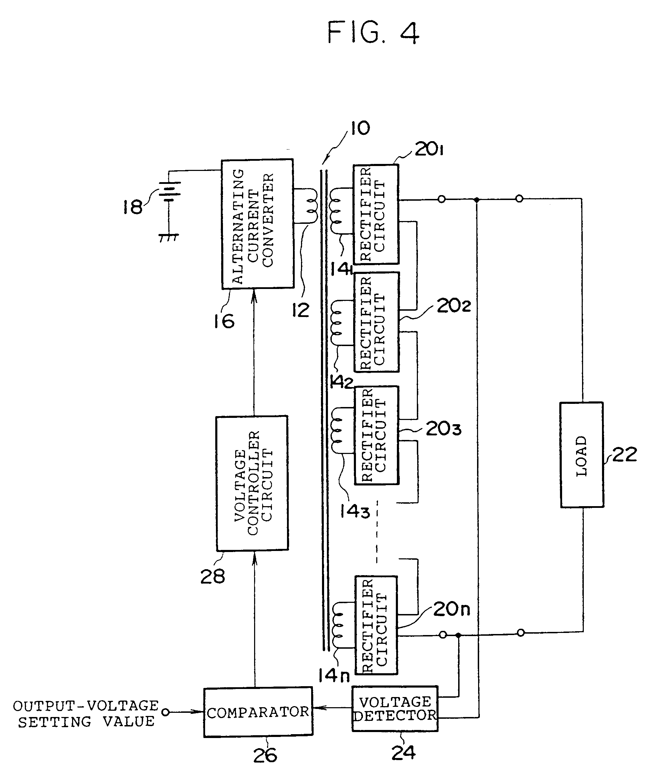

FIG. 4 is a block diagram illustrating a second embodiment of the present invention;

FIG. 5 is a circuit diagram depicting an array of rectifier circuits employed in the second embodiment;

FIG. 6 is a circuit diagram showing another array of rectifier circuits employed in the second embodiment; and

FIG. 7 is a cross-sectional view showing one example of a load employed in both of the first and second embodiments.

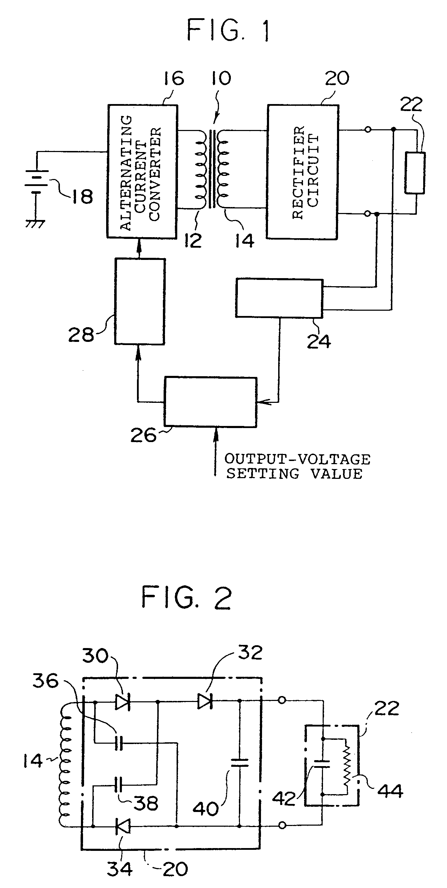

Preferred embodiments of the present invention will hereinafter be described in detail with reference to the accompanying drawings. FIG. 1 shows a power supply circuit as a first embodiment of the present invention. An alternating current (hereinafter abbreviated as "a.c.") converter 16 comprised of an inverter and the like is electrically connected to the primary winding 12 of a step-up transformer 10. A direct current (hereinafter abbreviated as "d.c.") power supply 18 is electrically connected to the a.c. converter 16. A rectifier circuit 20 is electrically connected to the secondary winding 14 of the step-up transformer 10. A capacitive load 22 is electrically connected to the output terminals of the rectifier circuit 20. In addition, a voltage detector 24 is electrically connected to the output terminals of the rectifier circuit 20. The output terminal of the voltage detector 24 is electrically connected to a comparator 26 to which an output-voltage setting value is to be input. The output terminal of the comparator 26 is electrically connected to the a.c. converter 16 via a voltage controller circuit 28 for controlling the magnitude of the voltage applied where by means of pulse width modulation control.

As shown in FIG. 2, the rectifier circuit 20 is comprised of a voltage tripler. The voltage tripler comprises three diodes 30, 32, 34 and three capacitors 36, 38, 40. The capacitive load 22 includes a capacitive component 42 and a resistive component 44. The capacitive load 22 is electrically parallel-connected to the capacitor 40. In addition, the secondary winding 14 is electrically connected between the anodes of the diodes 30, 34.

In the present embodiment, when the a.c. converter 16 supplies alternating current to the primary winding 12, the alternating current is induced in the secondary winding 14. The induced alternating current is rectified by the rectifier circuit 20 and then supplied to the capacitive load 22. The voltage output from the rectifier circuit 20 is subjected to feedback control so as to reach the output-voltage setting value by means of the voltage detector 24, the comparator 26 and the voltage controller circuit 28.

When the application of the voltage to the capacitive load 22 is stopped, electric charges stored in the capacitor 40 and the capacitive component 42 are discharged by the resistive component 44. In the present embodiment, the capacitance C1 of the capacitor 40 is defined such that $(C1 + C2)R$ be either equal to or smaller than K, i.e., $(C1 + C2)R \leqq K$ (where K = constant), in order to produce quick response to the above discharge. In the above expression, C2 represents the capacitance of the capacitive component 42 in the capacitive load 22, R represents the resistance of the resistive component 44, and $(C1 + C2)R$ represents a discharge time constant. K is a few msecs or less, preferably less than or equal to 500 $\mu$ sec, C2 is 150 PF, and R is about 2M $\Omega$ . According to the present embodiment as described above, the capacitance of each capacitor which contributes to the discharge of the rectifier circuit is fixed such that the discharge time constant reaches a predetermined value or less, thereby making it possible to provide rapid discharge response.

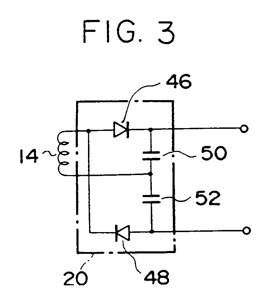

FIG. 3 shows another rectifier circuit 20 employed in the first embodiment of the present invention. The rectifier circuit 20 is comprised of a voltage doubler. The voltage doubler comprises two diodes 46, 48 and two capacitors 50, 52. The secondary winding 14 is electrically connected between a junction point, at which the capacitor 50 is electrically connected to the capacitor 52, and the anode of the diode 46. When the voltage doubler is activated, electric charges stored in the capacitors 50, 52 and the capacitive component 42 are discharged through the resistive component 44. Therefore, the total capacitance of both of the individual capacitors 50, 52 may be $(K - C2 \times R)/R$ or less.

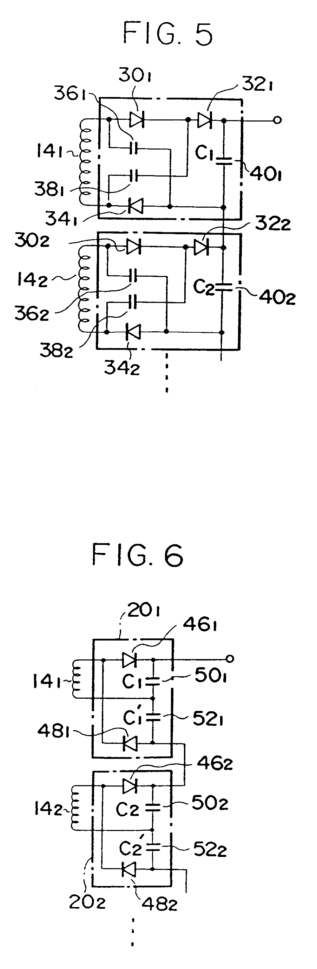

A second embodiment of the present invention will now be described below. The present embodiment is provided with a plurality of secondary windings and a plurality of rectifier circuits. Other elements of structure employed in the second embodiment are identical to those used in the first embodiment. Therefore, the same elements of structure as those employed in the first embodiment are identified by like reference numerals, and their description will therefore be omitted. The step-up transformer 10 employed in the present embodiment includes the single primary winding 12 and n secondary windings $14_1$, $14_2$, $14_3$, ..., $14_n$. Rectifier circuits $20_1$, $20_2$, $20_3$, ..., $20_n$ are electrically connected to the respectively corresponding secondary windings $14_1$, $14_2$, $14_3$, ..., $14_n$. One of the output terminals of the rectifier circuit $20_1$ is electrically connected to one of the two terminals of the capacitive load 22. The other output terminal of the rectifier circuit 20, is electrically connected to one of the output terminals of the rectifier circuit $20_2$. The other terminal of the rectifier circuit $20_2$ is electrically connected to one of the output terminals of the rectifier circuit $20_3$, whose other terminal is electrically connected to one of the output terminals of the rectifier circuit $20_4$. Similarly, the remaining rectifier circuits are electrically connected to one another via their terminals. Thus, the rectifier circuits $20_1$, $20_2$, $20_3$, ..., $20_n$ are series-connected to one another. The other of the two output terminals of the rectifier circuit $20_n$ is electrically connected to the other terminal of the capacitive load 22. In addition, the voltage detector 24 is electrically connected between the one output terminal of the rectifier circuit $20_1$ and the other output terminal of the rectifier circuit $20_n$. The voltage tripler, which is shown in FIG. 2 and is employed in the first embodiment, can be used as each of the rectifier circuits employed in the present embodiment, as shown in FIG. 5. The voltage doubler, which is shown in FIG. 3 and is employed in the first embodiment, can be used as each of the rectifier circuits employed in the present embodiment, as shown in FIG. 6.

In the present embodiment, the n secondary windings, which have not been connected to each other, are electrically connected to the respectively corresponding rectifier circuits. The rectifier circuits are connected to each other in series. Accordingly, the voltage produced across both terminals of this series circuit is equal to the sum of voltages output from the individual rectifier circuits. If it is assumed that the outputs of the rectifier circuits are identical to one another, then a primary-to-secondary turn ratio may be set to 1/n to produce the primary-to-secondary voltage increase ratio, i.e., the ratio of increase in voltage, which is identical to that produced in the first embodiment. In addition, the ratio of a d.c. voltage having twice the peak a.c. input voltage to the a.c. input voltage, of the rectifier circuit, can also be reduced depending on the number of rectifier circuits to be used. Accordingly, each of the rectifier circuits can be comprised of diodes and capacitors which all have a low resistance to voltage. It is therefore possible to improve the response characteristic and operational efficiency of the power supply circuit. In addition, the power supply circuit can be manufactured at low cost and can be made small.

Since the ratio of increase in voltage can be raised by using electrical parts which have low resistance to voltage, the present embodiment can be applied to vehicle-applied devices using electrorheological fluid, which enables an increase in voltages ranging from approximately 12 V to 10 KV. When the voltage tripler is used, capacitances $C_1$, $C_2$, $C_3$, ..., $C_n$ of capacitors $40_1$, $40_2$, $40_3$, ..., $40_n$ may respectively be determined such as to satisfy the following expression:

$$\left( \frac{1}{\displaystyle\sum_{i=1}^{n} \frac{1}{C_i}} + C2 \right) \times R \leqq K$$

When the respective capacitances are set equal to $C_c$, the above expression can be rewritten as follows:

$$\left( \frac{C_c}{2n} + C2 \right) \times R \leqq K$$

In addition, capacitances $C_1$, $C_1'$, $C_2$, $C_2'$, $C_3$, $C_3'$, ..., $C_n$, $C_n'$ of capacitors $50_1$, $52_1$, $50_2$, $52_2$, ..., $50_n$, $52_n$ may respectively be determined in such a manner as to satisfy the following expression:

$$\left(\cfrac{1}{\displaystyle\sum_{i=1}^{n}\left(\cfrac{1}{C_i} + \cfrac{1}{C'_i}\right)} + C2\right) \times R \leqq K$$

When the respective capacitances are set equal to Co, the above expression can be rewritten as follows:

$$\left(\frac{Co}{2n} + C2\right) \times R \leq K$$

Incidentally, each of the above embodiments describes a case in which the d.c. voltage is converted into a.c. voltage and the converted a.c. voltage is applied across the primary winding. However, the d.c. and a.c. voltages may be applied across the primary winding. Alternatively, a pulsating voltage may be applied to the terminals of the primary winding.

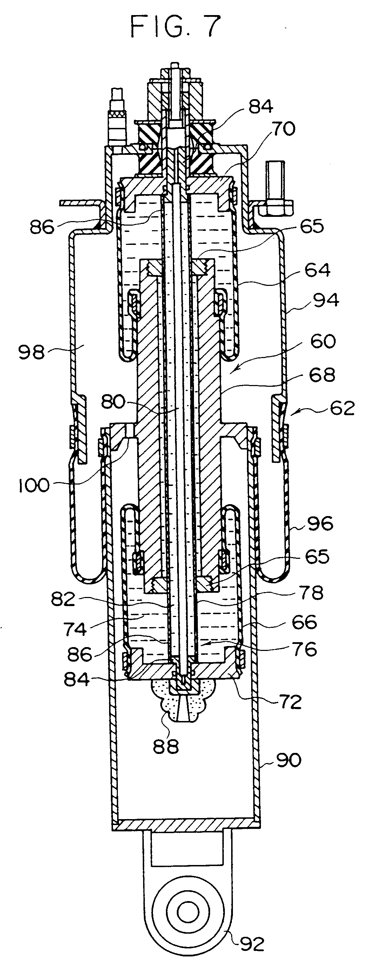

The capacitive load will now be described specifically by the following example with reference to FIG. 7.

This specific example is related to a vehicle suspension comprising a combination of a vibration damping apparatus 60 and an air spring 62. The vibration damping apparatus 60 has cylindrical, flexible diaphragms 64, 66. One end of a piston 68 is inserted into one end of the cylindrical, flexible member 64, and the other end of the piston 68 is inserted into one end of the cylindrical, flexible member 66 so as to be liquid-tight, i.e., so that liquid is prevented from leaking. The cylindrical, flexible diaphragms 64, 66 are connected to each other by the piston 68. The other ends of the cylindrical, flexible diaphragms 64, 66 are covered with a pair of metallic face plates 70, 77 respectively so as to be liquid-tight. Thus, liquid-tight chambers 74 are respectively defined in the cylindrical, flexible diaphragms 64, 66. The face plates 70, 72 are comprised of a bar-like positive electrode 80, which penetrates the face plates 70, 72, and a cylindrical negative electrode 78 with a restriction or diaphragm passage 82 defined between the positive electrode 80 and the negative electrode 78. In addition, the face plates 70, 72 are connected to each other by a connecting member 76 which centrally extends through the piston 60 and is guided by guide members 65. A portion of the connecting member 76 which extends through the face plate 72 is covered with a stopper 88 formed of an elastic material. The positive electrode 80 and the negative electrode 78 are insulated from each other by an insulating material 84 interposed therebetween, which is formed of a synthetic resin, a ceramic or the like. In addition, the positive electrode 80 and each of the face plates 70, 72 are insulated from each other by the insulating material 84. Holes 86 are defined in positions near both ends of the negative electrode 78. The holes 86 allow the chambers 74 to communicate with the diaphragm passage 82. Electrorheological fluids are charged into the chambers 74 and the diaphragm passage 82.

A flange is formed on the outer peripheral wall of an intermediate portion of the piston 60. An inner cylindrical body 90, having a bottom, is attached to the flange. An eye hook 92 for mounting the this apparatus on an attachment portion of a vehicle is mounted on the bottom of the inner cylindrical body 90.

One end of an outer cylindrical body 94 is mounted on the face plate 70. One end of a flexible sleeve 96 is hermetically mounted on the other end of the outer cylindrical body 94. The other end of the flexible sleeve 96 is hermetically fitted onto the outer peripheral wall of the inner cylindrical body 90. Accordingly, an air chamber 98 is formed by the inside of the outer cylindrical body 94 and the inside of the inner cylindrical body 90. The inside of the outer cylindrical body 94 and the inside of the inner cylindrical body 90 communicate with each other by a through hole 100 which extends through the flange. The air spring 62 is formed by filling the air chamber 98 with air.

The electrodes of the vibration damping apparatus 60, which has been constructed as described above, for a vehicle suspension are electrically connected to the above-mentioned power supply circuit. Since the voltage of a vehicle battery is 12 volts at this time, the output of the power supply circuit is set to about 10 KV.

When an electric field does not exist in the space between the electrodes, the vibration damping apparatus 60 can exhibit a vibration damping function. On the other hand, when an electric field exists in the space between the electrodes, the viscosity of the electrorheological fluid increases in accordance with the strength of the produced electric field. Therefore, an intended vibration damping force can be produced by selecting the field strength.

In the vibration damping apparatus 60, the connecting member 76 may be disposed outside the chambers 74. However, it is preferable that the connecting member 76 be allowed to extend through the piston 60 and be disposed inside the chambers 74 so that the apparatus may be made more compactly. In this case, the sliding movement of the connecting member 76 along the piston 60 is guided by the guide members 65 respectively mounted on the upper and lower ends of the piston 60. Therefore, the connecting member 76 can slide smoothly along the piston 60. This guiding action is preferable in view of the fact that the connecting member 76 can be prevented from being held in abutment against the piston 60.

It is unnecessary to form liquid-tight seals between each of the guide members 65 and the connecting member 76. Each of the guide members 65 can be prevented from being closely fitted on the connecting member 76. Therefore, the connecting member 76 can be actuated by a slight driving force.

In the present embodiment, the diaphragm passage 82 in the connecting member 76 is defined in the form of a cylinder in order to create a desired cross section. However, the shape of the diaphragm passage 82 can be changed as needed to other shapes such as a barrel, a column having a suitable contour, etc.. The flowing of the electrorheological fluids stored in the diaphragms 64, 66 into the diaphragm passage 82 can be ensured by allowing the diaphragm passage 82 formed in this way to communicate with the insides of the diaphragms 64, 66 by means of the holes 86 defined in the ends of the connecting member 76.

According to the vibration damping apparatus constructed as described above, the length of the diaphragm passage 82 can be increased. Even if the cross section of the diaphragm passage 82 is reduced as needed, the components can completely be prevented from contacting with each other. Therefore, the vibration damping function of the vibration damping apparatus can be improved as expected without any inconveniences.

## Claims

1. A power supply circuit comprising:
   a transformer (10); and
   a rectifier circuit (20) electrically connected to a secondary winding (14) of said transformer (10) and having a capacitor (40), characterised in that a capacitive load (22) is connected to output terminals of said rectifier circuit (20), electric charges stored in said capacitor (40) and in a capacitive component (42) of said capacitive load (22) are discharged through a resistive component (44) of said capacitive load (22) when an application of a voltage to said capacitive load (22) is cut off, and an electrostatic capacitance (C1) of said capacitor (40) is determined such that a discharge time constant (K) of a circuit comprising said capacitor (40) and said capacitive load (22) is a predetermined value or less.

2. A power supply circuit according to claim 1, further characterised in that a primary winding (12) of said transformer (10) is electrically connected to a direct current power supply (18) through an alternating current converter (16).

3. A power supply circuit according to claim 1, further characterised in that said capacitor (40) is electrically parallel-connected to said capacitive load (22).

4. A power supply circuit according to claim 1, further characterised in that said rectifier circuit includes a plurality of diodes (30,32,34) and a plurality of capacitors (36,38,40) including a capacitor (40) electrically parallel-connected to said capacitive load (22).

5. A power supply circuit according to claim 1, further characterised in that said rectifier circuit (20) comprises:
   a first diode (30) whose anode is electrically connected to one end of said secondary winding (14) of said transformer (10) ;
   a second diode (32) whose anode is electrically connected to a cathode of said first diode (30) and whose cathode is electrically connected to one end of said capacitive load (22);
   a third diode (34) whose cathode is electrically connected to the other end of said secondary winding (14) and whose anode is electrically connected to the other end of said capacitive load (22);
   a first capacitor (36) having one end electrically connected to the one end of said secondary winding (14), and the other end electrically connected to the anode of said third diode (34);
   a second capacitor (38) having one end electrically connected to the other end of said secondary winding (14), and the other end electrically connected to the cathode of said first diode (30); and
   a third capacitor (40) having one end electrically connected to the cathode of said second diode (32), and the other end electrically connected to the anode of said third diode (34).

6. A power supply circuit according to claim 1, further characterised in that said rectifier circuit (20) includes a plurality of diodes (46,48) and a plurality of electrically series-connected capacitors (50,52) electrically parallel-connected to said capacitive load (22).

7. A power supply circuit according to claim 1, further characterised in that said rectifier circuit comprises:

a first diode (46) whose anode is electrically connected to one end of said secondary winding (14) and whose cathode is electrically connected to one end of said capacitive load (22).

a second diode (48) whose cathode is electrically connected to the one end of said secondary winding (14) and whose anode is electrically connected to the other end of said capacitive load (22); and

two capacitors (50,52) electrically series-connected to each other, said two capacitors having one end electrically connected to the cathode of said first diode (46), the other end electrically connected to the anode of said second diode (48) and a junction point between said two capacitors (50,52), which is electrically connected to the other end of said secondary winding (14).

8. A power supply circuit according to claim 1, further characterised in that said capacitive load (22) is an electrorheological fluid applied apparatus using electrorheological fluid.

9. A power supply circuit according to claim 1, further characterised in that said predetermined value (K) is several msecs.

10. A power supply circuit comprising:

a transformer (10) having a primary winding (12) and a plurality of secondary windings ($14_1, 14_2, 14_3, 14_n$) electrically mutually unconnected to one another; and

a plurality of rectifier circuits ($20_1, 20_2, 20_3, 20_n$), each electrically connected to corresponding one of the secondary windings ($14_1$--$14_n$) of said transformer (10) and having a capacitor ($50_1, 52_1$--$50_n, 52_n$), characterised in that the capacitors of said plurality of rectifier circuits ($20_1$--$20_n$) are mutually series-connected, wherein a capacitive load (22) is connected to output terminals of a combination of said plurality of rectifier circuits ($20_1$--$20_n$), electric charges stored in said plurality of capacitors ($50_1, 52_1$--$50_n, 52_n$) and in a capacitive component (42) of said capacitive load (22) are discharged through a resistive component (44) of said capacitive load (22) when an application of a voltage to said capacitive load (22) is cut off, and a combined electrostatic capacitance of said plurality of capacitors is determined such that a discharge time constant (K) of a circuit comprising said plurality of capacitors ($50_1, 52_1$--$50_n, 52_n$) and said capacitive load (22) is a predetermined value or less.

11. A power supply circuit according to claim 10, further characterised in that the primary winding (12) of said transformer (10) is electrically connected to a direct current power supply (18) through an alternating current converter (16).

12. A power supply circuit according to claim 10, further characterised in that said plurality of capacitors ($50_1, 52_1$--$50_n, 52_n$) is electrically parallel-connected to said capacitive load (22).

13. A power supply circuit according to claim 10, further characterised in that each of said rectifier circuits ($20_{n-1}$) has a plurality of diodes ($46_1, 48_1$--$46_n, 48_n$) and a plurality of capacitors ($50_1, 52_1$--$50_n, 52_n$) including a capacitor ($52_{n-1}$) electrically series-connected to a capacitor ($50_n$) of an adjacent rectifier circuit ($20_n$).

14. A power supply circuit according to claim 10, further characterised in that each of said rectifier circuits ($20_1, 20_2$--$20_n$) comprises:

a first diode ($30_1$--$30_n$) whose anode is electrically connected to one end of one of said plurality of secondary windings ($14_1$--$14_n$);

a second diode ($32_1$--$32_n$) and whose anode is electrically connected to a cathode of said first diode ($30_1$--$30_n$) and whose cathode is electrically connected to one end of said capacitive load (22);

a third diode ($34_1$--$34_n$) whose cathode is electrically connected to the other end of said one of said plurality of secondary windings ($14_1$--$14_n$) and whose anode is electrically connected to the other end of said capacitive load (22);

a first capacitor ($36_1$--$36_n$) having one end electrically connected to the one end of said one of said plurality of secondary windings ($14_1$--$14_n$), and the other end electrically connected to the anode of said third diode ($34_1$--$34_n$);

a second capacitor ($38_1$--$38_n$) having one end electrically connected to the other end of said one of said plurality of second windings ($14_1$--$14_n$), and the other end electrically connected to the cathode of said first diode ($30_1$--$30_n$); and

a third capacitor ($40_1$--$40_n$) having one end electrically connected to the cathode of said second diode ($32_1$--$32_n$), and the other end electrically connected to the anode of said third diode ($34_1$--$34_n$) said

third capacitor ($40_{n-1}$) being electrically series-connected to a capacitor ($40_n$) of an adjacent rectifier circuit.

15. A power supply circuit according to claim 10, further characterised in that each of said rectifier circuits ($20_1$--$20_n$) includes a plurality of diodes ($46_1, 48_1$--$46_n, 48_n$) and a plurality of series-connected capacitors ($50_1, 52_1$--$50_n, 52_n$) electrically series-connected to a capacitor of an adjacent rectifier circuit.

16. A power supply circuit according to claim 10, further characterised in that each of said rectifier circuits ($20_1$--$20_n$) comprises:

a first diode ($46_1$--$46_n$) whose anode is electrically connected to one end of one of said plurality of secondary windings ($14_1$--$14_n$) and whose cathode is electrically connected to one end of said capacitive load (22);

a second diode ($48_1$--$48_n$) whose cathode is electrically connected to the one end of said one of said plurality of secondary windings ($14_1$--$14_n$) and whose anode is electrically connected to the other end of said capacitive load (22); and

two capacitors ($50_1, 52_1$--$50_n, 52_n$) electrically series-connected to each other, said two capacitors having one end ($50_1$--$50_n$) electrically connected to the cathode of said first diode ($46_1$--$46_n$), the other end ($52_1$--$52_n$) electrically connected to the anode of said second diode, and a junction point between said two capacitors, which is electrically connected to the other end of said one of said plurality of secondary windings ($14_1$--$14_{n-1}$), said two capacitors being electrically series-connected to a capacitor of an adjacent rectifier circuit ($14_n$).

17. A power supply circuit according to claim 10, further characterised in that said capacitive load (22) is an applied electrorheological fluid apparatus using electrorheological fluid.

18. A power supply circuit according to claim 10, further characterised in that said predetermined value (K) is several msecs.


**Patentansprüche**

1. Speisespannungsschaltung, mit
einem Transformator (10); und
einer Gleichrichterschaltkreis (20), der mit einer Sekundärwicklung (14) des Transformators (10) verbunden ist und einen Kondensator (40) aufweist, **dadurch gekennzeichnet**, daß eine kapazitive Last (22) mit Ausgangsklemmen des Gleichrichterschaltkreises (20) verbunden ist, daß elektrische Ladungen, die im Kondensator (40) und in einem kapazitiven Bauteil (42) der kapazitiven Last (22) gespeichert sind, über ein Widerstandsbauteil (44) der kapazitiven Last (22) entladen werden, wenn das Anlegen einer Spannung an die kapazitive Last (22) unterbrochen ist, und daß eine elektrostatische Kapazität (C1) des Kondensators (40) derart bestimmt ist, daß eine Entladezeitkonstante (K) eines Schaltkreises, der den Kondensator (40) und die kapazitive Last (22) enthält, einen vorbestimmten Wert oder weniger besitzt.

2. Speisespannungsschaltung nach Anspruch 1, ferner dadurch gekennzeichnet, daß eine Primärwicklung (12) des Transformators (10) mit einer Gleichstrom-Spannungsversorgung (18) über einen Wechselrichter (16) elektrisch verbunden ist.

3. Speisespannungsschaltung nach Anspruch 1, ferner dadurch gekennzeichnet, daß der Kondensator (40) zur kapazitiven Last (22) elektrisch parallel geschaltet ist.

4. Speisespannungsschaltung nach Anspruch 1, ferner dadurch gekennzeichnet, daß der Gleichrichterschaltkreis eine Vielzahl Dioden (30,32,34) und eine Vielzahl Kondensatoren (36,38,40) einschl. eines Kondensators (40), der zur kapazitiven Last (22) elektrisch parallel geschaltet ist, aufweist.

5. Speisespannungsschaltung nach Anspruch 1, ferner dadurch gekennzeichnet, daß der Gleichrichterschaltkreis (20) folgendes aufweist:
eine erste Diode (30), deren Anode mit einem Ende der zweiten Wicklung (14) des Transformators (10) elektrisch verbunden ist;
eine zweite Diode (32), deren Anode mit einer Kathode der ersten Diode (30) und deren Kathode mit einem Ende der kapazitiven Last (22) elektrisch verbunden ist; eine dritte Diode (34), deren Kathode mit dem anderen Ende der Sekundärwicklung (14) und deren Anode mit dem anderen Ende der kapazitiven Last (22) elektrisch verbunden ist;

einen ersten Kondensator (36), dessen eines Ende mit dem einen Ende der Sekundärwicklung (14) und dessen anderes Ende mit der Kathode der dritten Diode (34) elektrisch verbunden ist;

einen zweiten Kondensator (38), dessen eines Ende mit dem anderen Ende der Sekundärwicklung (14) und dessen anderes Ende mit der Kathode der ersten Diode (30) elektrisch verbunden ist; und

einen dritten Kondensator (40), dessen eines Ende mit der Kathode der zweiten Diode (32) und dessen anderes Ende mit der Kathode der dritten Diode (34) elektrisch verbunden ist.

6. Speisespannungsschaltung nach Anspruch 1, ferner dadurch gekennzeichnet, daß der Gleichrichterschaltkreis (20) eine Vielzahl Dioden (46,48) und eine Vielzahl elektrisch in Reihe geschalteter Kondensatoren (50,52), die mit der kapazitiven Last (22) elektrisch parallel geschaltet sind, aufweist.

7. Speisespannungsschaltung nach Anspruch 1, ferner dadurch gekennzeichnet, daß der Gleichrichterschaltkreis folgendes aufweist: eine erste Diode (46), deren Anode mit einem Ende der Sekundärwicklung (14) und deren Kathode mit einem Ende der kapazitiven Last (22) elektrisch verbunden ist; eine zweite Diode (48), deren Kathode mit dem einen Ende der Sekundärwicklung (14) und deren Anode mit dem anderen Ende der kapazitiven Last (22) elektrisch verbunden ist; und

zwei Kondensatoren (50,52) in elektrischer Reihenschaltung, wobei ein Ende der beiden Kondensatoren mit der Kathode der ersten Diode (46) und das andere Ende mit der Anode der zweiten Diode (48) und ein Verbindungspunkt zwischen den beiden Kondensatoren (50,52) mit dem anderen Ende der Sekundärwicklung (14) elektrisch verbunden ist.

8. Speisespannungsschaltung nach Anspruch 1, ferner dadurch gekennzeichnet, daß die kapazitive Last (22) eine ein elektrorheologisches Fluid verwendende Vorrichtung ist.

9. Speisespannungsschaltung nach Anspruch 1, ferner dadurch gekennzeichnet, daß der vorbestimmte Wert (K) einige mSec beträgt.

10. Speisespannungsschaltung, enthaltend:
einen Transformator (10) mit einer Primärwicklung (12) und einer Vielzahl Sekundärwicklungen ($14_1$, $14_2$, $14_3$, $14_n$), die untereinander elektrisch nicht verbunden sind; und
eine Vielzahl Gleichrichterschaltkreise ($20_1$, $20_2$, $20_3$, $20_n$), von denen jeder mit der entsprechenden Sekundärwicklung ($14_1$-$14_n$) des Transformators (10) elektrisch verbunden ist und einen Kondensator ($50_1$, $52_1$-$50_n$, $52_n$) aufweist, dadurch gekennzeichnet, daß die Kondensatoren der Vielzahl der Gleichrichterschaltkreise ($20_1$-$20_n$) untereinander in Reihe geschaltet sind, wobei eine kapazitive Last (22) mit den Ausgangsklemmen einer Kombination der Vielzahl der Gleichrichterschaltkreise ($20_1$-$20_n$) verbunden ist, daß elektrische Ladungen, die in der Vielzahl der Kondensatoren ($50_1$, $52_1$-$50_n$, $52_n$) und in einem kapazitiven Bauteil (42) der kapazitiven Last (22) gespeichert sind, über ein Widerstandsbauteil (44) der kapazitiven Last (22) dann entladen werden, wenn das Anlegen einer Spannung an die kapazitive Last (22) unterbrochen ist, und daß eine zusammengefaßte elektrostatische Kapazität der Vielzahl der Kondensatoren derart bestimmt ist, daß eine Entladezeitkonstante (K) eines die Vielzahl der Kondensatoren ($50_1$, $52_1$-$50_n$, $52_n$) und die kapazitive Last (22) enthaltenden Schaltkreises einen bestimmten Wert oder niedriger besitzt.

11. Speisespannungsschaltung nach Anspruch 10, dadurch gekennzeichnet, daß die Primärwicklung (12) des Transformators (10) mit einer Gleichstrom-Spannungsversorgung (18) über einen Wechselrichter (16) elektrisch verbunden ist.

12. Speisespannungsschaltung nach Anspruch 10, ferner dadurch gekennzeichnet, daß die Vielzahl der Kondensatoren ($50_1$, $52_1$-$50_n$, $52_n$) mit der kapazitiven Last (22) elektrisch parallel geschaltet ist.

13. Speisespannungsschaltung nach Anspruch 10, ferner dadurch gekennzeichnet, daß jeder der Gleichrichterschaltkreise ($20_{n-1}$) eine Vielzahl Dioden ($46_1$, $48_1$-$46_n$, $48_n$) und eine Vielzahl Kondensatoren ($50_1$, $52_1$-$50_n$, $52_n$) einschl. eines mit einem Kondensator ($50_n$) eines benachbarten Gleichrichterschaltkreises ($20_n$) elektrisch reihengeschalteten Kondensators ($52_{n-1}$) aufweist.

**14.** Speisespannungsschaltung nach Anspruch 10, ferner dadurch gekennzeichnet, daß jeder der Gleichrichterschaltkreise ($20_1$, $20_2$-$20_n$) folgendes aufweist:
eine erste Diode ($30_1$-$30_n$), deren Anode mit einem Ende einer der Vielzahl Sekundärwicklungen ($14_1$-$14_n$) elektrisch verbunden ist;
eine zweite Diode ($32_1$-$32_n$), deren Anode mit einer Kathode der ersten Diode ($30_1$-$30_n$) und deren Kathode mit einem Ende der kapazitiven Last (22) elektrisch verbunden ist;
eine dritte Diode ($34_1$-$34_n$), deren Kathode mit dem anderen Ende der einen der Vielzahl Sekundärwicklungen ($14_1$-$14_n$) und deren Anode mit dem anderen Ende der kapazitiven Last (22) elektrisch verbunden ist; einen ersten Kondensator ($36_1$-$36_n$), dessen eines Ende mit dem einen Ende der einen der Vielzahl Sekundärwicklungen ($14_1$-$14_n$) und dessen anderes Ende mit der Anode der dritten Diode ($34_1$-$34_n$) elektrisch verbunden ist;
einen zweiten Kondensator ($38_1$-$38_n$), dessen eines Ende mit dem anderen Ende der einen der Vielzahl Sekundärwicklungen ($14_1$-$14_n$) und dessen anderes Ende mit der Kathode der ersten Diode ($30_1$-$30_n$) elektrisch verbunden ist und
einen dritten Kondensator ($40_1$-$40_n$), dessen eines Ende mit der Kathode der zweiten Diode ($32_1$-$32_n$) und dessen anderes Ende mit der Anode der dritten Diode ($34_1$-$34_n$) elektrisch verbunden ist, wobei der dritte Kondensator ($40_{n-1}$) in Reihe mit einem Kondensator ($40_n$) eines benachbarten Gleichrichterschaltkreises elektrisch verbunden ist.

**15.** Speisespannungsschaltung nach Anspruch 10, ferner dadurch gekennzeichnet, daß jeder der Gleichrichterschaltkreise ($20_1$-$20_n$) eine Vielzahl Dioden ($46_1$, $48_1$-$46_n$, $48_n$) und eine Vielzahl in Reihe geschalteter Kondensatoren ($50_1$, $52_1$-$50_n$, $52_n$), die mit einem Kondensator eines benachbarten Gleichrichterschaltkreises elektrisch in Reihe geschaltet sind, enthält.

**16.** Speisespannungsschaltung nach Anspruch 10, ferner dadurch gekennzeichnet, daß jeder der Gleichrichterschaltkreise ($20_1$-$20_n$) folgendes aufweist: eine erste Diode ($46_1$-$46_n$), deren Anode mit einem Ende der Vielzahl Sekundärwicklungen ($14_1$-$14_n$) und deren Kathode mit einem Ende der kapazitiven Last (22) elektrisch verbunden ist;
eine zweite Diode ($48_1$-$48_n$), deren Kathode mit dem einen Ende der einen der Vielzahl Sekundärwicklungen ($14_1$-$14_n$) und deren Anode mit dem anderen Ende der kapazitiven Last (22) elektrisch verbunden ist; und
zwei Kondensatoren ($50_1$,$52_1$-$50_n$, $52_n$), die miteinander elektrisch in Reihe geschaltet sind, wobei ein Ende ($50_1$-$50_n$) der beiden Kondensatoren mit der Kathode der ersten Diode ($46_1$-$46_n$), das andere Ende ($52_1$-$52_n$) mit der Anode der zweiten Diode und ein Verbindungspunkt zwischen den beiden Kondensatoren mit dem anderen Ende des einen der Vielzahl der Sekundärwicklungen ($14_1$-$14_{n-1}$) elektrisch verbunden ist, wobei die beiden Kondensatoren mit einem Kondensator eines benachbarten Gleichrichterschaltkreises ($14_n$) elektrisch verbunden sind.

**17.** Speisespannungsschaltung nach Anspruch 10, ferner dadurch gekennzeichnet, daß die kapazitive Last (22) eine ein elektrorheologisches Fluid verwendende Vorrichtung ist.

**18.** Speisespannungsschaltung nach Anspruch 10, ferner dadurch gekennzeichnet, daß der vorbestimmte Wert (K) einige mSec beträgt.

## Revendications

**1.** Circuit d'alimentation en énergie, comprenant :
un transformateur (10), et
un circuit redresseur (20) connecté électriquement à un enroulement secondaire (14) du transformateur (10) et possédant un condensateur (40), caractérisé en ce qu'une charge capacitive (22) est connectée aux bornes de sortie du circuit redresseur (20), des charges électriques emmagasinées dans le condensateur (40) et dans un composant capacitif (42) de la charge capacitive (22) sont déchargées dans un composant résistif (44) de la charge capacitive (22) lorsque l'application d'une tension à la charge capacitive (22) est interrompue, et une capacité électrostatique (C1) du condensateur (40) est déterminée de manière qu'une constante de temps (K) de décharge d'un circuit comprenant le condensateur (40) et la charge capacitive (22) soit inférieure ou égale à une valeur prédéterminée.

2. Circuit d'alimentation en énergie selon la revendication 1, caractérisé en outre en ce qu'un enroulement primaire (12) du transformateur (10) est connecté électriquement à une alimentation en courant continu (18) par un convertisseur (16) de courant alternatif.

3. Circuit d'alimentation en énergie selon la revendication 1, caractérisé en outre en ce que le condensateur (40) est électriquement connecté en parallèle à la charge capacitive (22).

4. Circuit d'alimentation en énergie selon la revendication 1, caractérisé en outre en ce que le circuit redresseur possède plusieurs diodes (30, 32, 34) et plusieurs condensateurs (36, 38, 40) comprenant un condensateur (40) connecté électriquement en parallèle à la charge capacitive (22).

5. Circuit d'alimentation en énergie selon la revendication 1, caractérisé en outre en ce que le circuit redresseur (20) comprend :
une première diode (30) dont l'anode est connectée électriquement à une première extrémité de l'enroulement secondaire (14) du transformateur (10),
une seconde diode (32) dont l'anode est connectée électriquement à une cathode de la première diode (30) et dont la cathode est connectée électriquement à une première extrémité de la charge capacitive (22),
une troisième diode (34) dont la cathode est connectée électriquement à l'autre extrémité de l'enroulement secondaire (14) et dont l'anode est connectée électriquement à l'autre extrémité de la charge capacitive (22),
un premier condensateur (36) dont une première extrémité est connectée électriquement à une première extrémité de l'enroulement secondaire (14) et l'autre extrémité est connectée électriquement à l'anode de la troisième diode (34),
un second condensateur (38) dont une première extrémité est connectée électriquement à l'autre extrémité de l'enroulement secondaire (14), et l'autre extrémité est connectée électriquement à la cathode de la première diode (30), et
un troisième condensateur (40) ayant une première extrémité connectée électriquement à la cathode de la seconde diode (32), et l'autre extrémité est connectée électriquement à l'anode de la troisième diode (34).

6. Circuit d'alimentation en énergie selon la revendication 1, caractérisé en outre en ce que le circuit redresseur (20) possède plusieurs diodes (46, 48) et plusieurs condensateurs (50, 52) connectés électriquement en série et connectés électriquement en parallèle à la charge capacitive (22).

7. Circuit d'alimentation en énergie selon la revendication 1, caractérisé en outre en ce que le circuit redresseur comporte :
une première diode (46) dont l'anode est connectée électriquement à une première extrémité de l'enroulement secondaire (14) et dont la cathode est connectée électriquement à une première extrémité de la charge capacitive (22),
une seconde diode (48) dont la cathode est connectée électriquement à la première extrémité de l'enroulement secondaire (14) et dont l'anode est connectée électriquement à l'autre extrémité de la charge capacitive (22), et
deux condensateurs (50, 52) connectés électriquement en série l'un avec l'autre, les deux condensateurs ayant une première extrémité connectée électriquement à la cathode de la première diode (46), l'autre extrémité connectée électriquement à l'anode de la seconde diode (48) et un point de connexion des deux condensateurs (50, 52) qui est connecté électriquement à l'autre extrémité de l'enroulement secondaire (14).

8. Circuit d'alimentation en énergie selon la revendication 1, caractérisé en outre en ce que la charge capacitive (22) est un appareil alimenté en fluide électrorhéologique utilisant du fluide électrorhéologique .

9. Circuit d'alimentation en énergie selon la revendication 1, caractérisé en outre en ce que la valeur prédéterminée (K) est égale à quelques millisecondes.

10. Circuit d'alimentation en énergie d'alimentation en énergie, comprenant :
un transformateur (10) ayant un enroulement primaire (12) et plusieurs enroulements secondaires ($14_1$, $14_2$, $14_3$, $14_n$) qui ne sont pas connectés électriquement les uns aux autres, et

plusieurs circuits redresseurs ($20_1$, $20_2$, $20_3$, $20_n$) connectés chacun électriquement correspondent à des enroulements secondaires ($14_1$-$14_n$) du transformateur (10) et ayant un condensateur ($50_1$, $52_1$-$50_n$, $52_n$), caractérisé en ce que les condensateurs des circuits redresseurs ($20_1$-$20_n$) sont connectés mutuellement en série, et en ce qu'une charge capacitive (22) est connectée aux bornes de sortie d'une combinaison des circuits redresseurs ($20_1$-$20_n$), des charges électriques emmagasinées dans les condensateurs ($50_1$, $52_1$-$50_n$, $52_n$) et dans un composant capacitif (42) de la charge capacitive (22) sont déchargées à travers un composant résistif (44) de la charge capacitive (22) lorsqu'une application d'une tension à la charge capacitive (22) est interrompue, et une capacité électrostatique combinée des condensateurs est déterminée de manière que la constante de temps (K) de décharge d'un circuit comprenant les condensateurs ($50_1$, $52_1$-$50_n$, $52_n$) et la charge capacitive (22) soit inférieure ou égale à une valeur prédéterminée.

11. Circuit d'alimentation en énergie selon la revendication 10, caractérisé en outre en ce que l'enroulement primaire (12) du transformateur (10) est connecté électriquement à une alimentation en courant continu (18) par un convertisseur (16) de courant alternatif.

12. Circuit d'alimentation en énergie selon la revendication 10, caractérisé en outre en ce que les condensateurs ($50_1$, $52_1$-$50_n$, $52_n$) sont connectés électriquement en parallèle à la charge capacitive (22).

13. Circuit d'alimentation en énergie selon la revendication 10, caractérisé en outre en ce que chacun des circuits redresseurs ($20_{n-1}$) a plusieurs diodes ($46_1$, $48_1$-$46_n$, $48_n$) et plusieurs condensateurs ($50_1$, $52_1$-$50_n$, $52_n$) comprenant un condensateur ($52_{n-1}$) qui est connecté électriquement en série à un condensateur ($50_n$) d'un circuit redresseur adjacent ($20_n$).

14. Circuit d'alimentation en énergie selon la revendication 10, caractérisé en outre en ce que chacun des circuits redresseurs ($20_1$, $20_2$-$20_n$) comprend :
    une première diode ($30_1$-$30_n$) dont l'anode est connectée électriquement à une première extrémité de l'un des enroulements secondaires ($14_1$-$14_n$),
    une seconde diode ($32_1$-$32_n$) dont l'anode est connectée électriquement à une cathode de la première diode ($30_1$-$30_n$) et dont la cathode est connectée électriquement à une première extrémité de la charge capacitive (22),
    une troisième diode ($34_1$-$34_n$) dont la cathode est connectée électriquement à l'autre extrémité dudit enroulement secondaire parmi les enroulements secondaires ($14_1$-$14_n$) et dont l'anode est connectée électriquement à l'autre extrémité de la charge capacitive (22),
    un premier condensateur ($36_1$-$36_n$) ayant une première extrémité connectée électriquement à la première extrémité dudit enroulement secondaire parmi les enroulements secondaires ($14_1$-$14_n$) et l'autre extrémité est connectée électriquement à l'anode de la troisième diode ($34_1$-$34_n$),
    un second condensateur ($38_1$-$38_n$) ayant une première extrémité connectée électriquement à l'autre extrémité dudit enroulement secondaire parmi les enroulements secondaires ($14_1$-$14_n$) et l'autre extrémité est connectée électriquement à la cathode de la première diode ($30_1$-$30_n$), et
    un troisième condensateur ($40_1$-$40_n$) dont une première extrémité est connectée électriquement à la cathode de la seconde diode ($32_1$-$32_n$) et l'autre extrémité est connectée électriquement à l'anode de la troisième diode ($34_1$-$34_n$), le troisième condensateur ($40_{n-1}$) étant connecté électriquement en série à un condensateur ($40_n$) d'un circuit redresseur adjacent.

15. Circuit d'alimentation en énergie selon la revendication 10, caractérisé en outre en ce que chacun des circuits redresseurs ($20_1$-$20_n$) comprend plusieurs diodes ($46_1$, $48_1$-$46_n$, $48_n$) et plusieurs condensateurs connectés en série ($50_1$, $52_1$-$50_n$, $52_n$) qui sont connectés électriquement en série à un condensateur d'un circuit redresseur adjacent.

16. Circuit d'alimentation en énergie selon la revendication 10, caractérisé en outre en ce que chacun des circuits redresseurs ($20_1$-$20_n$) comprend :
    une première diode ($46_1$-$46_n$) dont l'anode est connectée électriquement à une première extrémité d'un enroulement secondaire parmi les enroulements secondaires ($14_1$-$14_n$) et dont la cathode est connectée électriquement à une première extrémité de la charge capacitive (22),
    une seconde diode ($48_1$-$48_n$) dont la cathode est connectée électriquement à une première extrémité dudit enroulement secondaire parmi les enroulements secondaires ($14_1$-$14_n$) et dont l'anode est connectée électriquement à l'autre extrémité de la charge capacitive (22), et
    deux condensateurs ($50_1$, $52_1$-$50_n$, $52_n$) qui sont connectés électriquement en série l'un avec l'autre, les deux condensateurs ayant une première extrémité ($50_1$-$50_n$) connectée électriquement à la cathode de la première diode ($46_1$-$46_n$), l'autre extrémité ($52_1$-$52_n$) connectée électriquement à l'anode de la seconde diode, et un point de connexion des deux condensateurs qui est électriquement connecté à l'autre extrémité dudit enroulement secondaire parmi les enroulements secondaires ($14_1$-$14_{n-1}$), les deux condensateurs étant connectés électriquement en série à un condensateur d'un circuit redresseur adjacent ($14_n$).

17. Circuit d'alimentation en énergie selon la revendication 10, caractérisé en outre en ce que la charge capacitive (22) est un appareil alimenté en fluide électrorhéologique comprenant un fluide électrorhéologique.

18. Circuit d'alimentation en énergie selon la revendication 10, caractérisé en outre en ce que la valeur prédéterminée (K) est égale à quelques millisecondes.

# FIG. 1

# FIG. 2

FIG. 3

# FIG. 4

FIG. 5

FIG. 6

# FIG. 7